# EUROPÄISCHE PATENTSCHRIFT

(11) **EP 1 529 199 B1**
(45) Veröffentlichungstag und Bekanntmachung des Hinweises auf die Patenterteilung: **01.08.2007**
(21) Anmeldenummer: 03787769.3
(22) Anmeldetag: 12.08.2003
(51) Int. Cl.: G01D 11/24, H05K 5/00

(54) **EIN- UND AUSGABEVORRICHTUNG ZUM LÖSBAREN ANBRINGEN AN EINEM ELEKTRONISCHEN GERÄT**
INPUT AND OUTPUT DEVICE FOR DETACHABLE CONNECTION TO AN ELECTRONIC DEVICE
DISPOSITIF D'ENTREE ET SORTIE QUI PEUT ETRE FIXE DE FAÇON AMOVIBLE A UN APPAREIL ELECTRONIQUE

(30) Priorität: 13.08.2002 US 403614 P
(43) Veröffentlichungstag der Anmeldung: 11.05.2005
(73) Patentinhaber: VEGA Grieshaber KG, 77709 Wolfach (DE)
(72) Erfinder: FEHRENBACH, Josef, 77716 Haslach (DE); STAIGER, Holger, 78730 Lauterbach (DE); MOTZER, Jürgen, 77723 Gengenbach (DE); ARNOLD, Thomas, 72275 Alpirsbach (DE); FALK, Johannes, 78112 St. Georgen (DE); DECK, Thomas, 77709 Wolfach (DE)
(74) Vertreter: Preuss, Udo
(86) Internationale Anmeldenummer: PCT/EP2003/008940
(87) Internationale Veröffentlichungsnummer: WO 2004/017026

(56) Entgegenhaltungen:
- DE-U- 8 817 213
- US-A- 4 748 861

## Beschreibung

### TECHNISCHES GEBIET

Die vorliegende Erfindung betrifft allgemein eine Ein- und Ausgabevorrichtung zum Eingeben von Daten oder Befehlen für ein elektronisches Gerät und/oder zum Anzeigen von Informationen des elektronischen Gerätes bzw. ein Anzeige- und Bedienmodul. Außerdem betrifft die Erfindung eine Kombination von Ein- und Ausgabevorrichtung und elektronischem Gerät.

Unter elektronischem Gerät im Sinne der vorliegenden Erfindung sind beispielsweise alle Arten von Feldgeräten oder Messvorrichtungen zu subsumieren. Die Messvorrichtungen können insbesondere auch auf unterschiedlichen Messprinzipien beruhen. So fallen unter den Begriff elektronisches Gerät beispielsweise Füllstandmessgeräte, Druckmessgeräte, Grenzstanderfassungsmessvorrichtungen, Temperaturmessvorrichtungen., um nur einige Beispiele zu nennen. In Bezug auf Füllstandmessvorrichtungen ist hervorzuheben, dass hierunter insbesondere sogenannte TDR-Füllstandmessgeräte, Radarmessgeräte also auch Ultraschallmessgeräte fallen. In Bezug auf Grenzwertgeber seien hier beispielsweise Vibrationsgrenzwertgeber und Ultraschallgrenzwertgeber genannt.

Elektronische Geräte, die auf den genannten Messprinzipien basieren, werden beispielsweise unter den Markennamen VEGAPULS, VEGASON, VEGAFLEX, VEGASWING, VEGABAR, VEGACAP vertrieben.

### HINTERGRUND DER ERFINDUNG

Elektronische Geräte besitzen oftmals eine Anzeige und/oder ein Bedienteil. Die Anzeige und das Bedienteil sind fest in das Gehäuse des jeweiligen elektronischen Gerätes integriert. Es kann beispielsweise sein, dass ein elektronisches Gerät vor seiner ersten Verwendung an einem Einsatzort konfiguriert werden muss, was die Eingabe von Daten notwendig macht, wofür das Bedienteil verwendet wird.. Danach kann unter Umständen keine Eingabe mehr notwendig werden, oder nur in einem längeren zeitlichen Abstand eine weitere Bedienung wieder notwendig werden. Auch eine Anzeige wie beispielsweise ein LCD-Display ist nur unter bestimmten Betriebsbedingungen zweckdienlich. Da aber nie ausgeschlossen werden kann, das man eine Eingabe an dem elektronischen Gerät tätigen muss, oder in bestimmten Fällen eine Anzeige von Daten des Gerätes gewünscht wird, sind alle elektronischen Geräte mit solchen Anzeigen und/oder Bedienteilen zu versehen. Dadurch sind die Geräte an sich teuer in der Herstellung.

DE 88 17 213 U betrifft eine Einrichtung zur Anzeige eines Anzeigewertes, bei der sich die Lage der Anzeigevorrichtung durch Verdrehen eines zugeordneten Gehäuseteils zusammen mit dem Gehäuseteil verändern lässt. Die Anzeigevorrichtung ist hierbei fest mit dem Gehäuseteil verschraubt. Das Gehäuseteil und die Anzeigevorrichtung können gegenüber einem Messgerät verdreht werden. Hier ist ein Anschlussstutzen vorgesehen, durch den elektrische Leitungen vom Messgerät zum Gehäuseteil führen.

### DARSTELLUNG DER ERFINDUNG

Gemäß einem ersten Aspekt der vorliegenden Erfindung wird erstmals eine an einem elektronischen Gerät lösbar anbringbare Ein- und Ausgabevorrichtung bereitgestellt. Die Ein- und Ausgabevorrichtung ist zum lösbaren Anbringen an dem elektronischen Gerät in zumindest zwei verschiedenen Positionen ausgebildet und weist eine erste Kontaktierungseinrichtung auf, die unabhängig von der gewählten Position in angebrachtem Zustand der Ein- und Ausgabevorrichtung an dem elektronischen Gerät mit einer zweiten Kontaktierungseinrichtung, die sich an dem elektronischen Gerät befindet, elektrisch in Verbindung gelangt.

Es sei hier eingangs angemerkt, dass unter dem Begriff Ein- und Ausgabevorrichtung im Sinne der vorliegenden Erfindung unterschiedlich funktionierende Vorrichtungen zu subsumieren sind. So ist hierunter beispielsweise eine Vorrichtung zu verstehen, die nur zur Eingabe von Daten oder Befehlen für das elektronische Gerät dient. Ferner kann unter den Begriff Ein- und Ausgabevorrichtung auch eine Vorrichtung fallen, die nur als Ausgabe von Daten des elektronischen Gerätes funktioniert, d.h. Daten oder allgemein Informationen des elektronischen Gerätes anzeigt, an dem es angebracht ist. Außerdem kann unter dem Begriff Ein- und Ausgabevorrichtung ein Vorrichtung zu subsumieren sein, die sowohl eine Eingabe als auch die Ausgabe von Informationen erlaubt, oder bei der wahlweise das eine oder andere durchführbar ist.

All den vorgenannten Vorrichtungen ist gemein, dass sie an einem elektronischen Gerät lösbar anbringbar sind. Insbesondere ist auch daran gedacht, elektronische Geräte, die unterschiedlicher Bauart sind und insbesondere auch auf unterschiedlichen Messprinzipien basieren - wie beispielsweise Druckmessung, Temperaturmessung, Füllstandmessung auf der Grundlage von Ultraschallwellen oder Mikrowellen sowie kapazitive Füllstandmessung und auch beispielsweise Grenzstanderfassung - mit einer immer gleich ausgestalteten Aufnahmevorrichtung zu versehen, die ein Anbringen einer erfindungsgemäßen Ein- und Ausgabevorrichtung erlaubt.

Gemäß einem weiteren Aspekt wird eine Ein- und Ausgabevorrichtung zum Eingeben von Daten und/oder zum Anzeigen von Informationen eines elektronischen Gerätes vorgestellt, die eine Befestigungseinrichtung zum lösbaren Anbringen der Ein- und Ausgabevorrichtung an dem elektronischen Gerät, und eine erste Kontaktierungseinrichtung umfasst, die in angebrachtem Zustand der Ein- und Ausgabevorrichtung an dem elektronischen Gerät mit einer zweiten Kontaktierungseinrichtung, die sich an dem elektronischen Gerät befindet, elektrisch in Verbindung gelangt. Die Befestigungseinrichtung kann hier entweder so ausgebildet sein, dass sie nur eine einzige Position zum Anbringen der Ein- und Ausgabevorrichtung an dem elektronischen Gerät erlaubt, oder dass mehr als eine Position eingenommen werden kann. Unter Umständen kann sie auch so ausgebildet sein, dass durch die Ein- und Ausgabevorrichtung jede gewünschte Position auf einem Kreis eingenommen werden kann, wofür die Befestigungseinrichtung dann eine Drehbewegung erlauben kann.

Ein weitere Aspekt der Erfindung betrifft ein Bedien- und Anzeigemodul für ein elektronisches Gerät, wobei das Modul zum lösbaren Anbringen an dem elektronischen Gerät in zumindest zwei verschiedenen Positionen ausgebildet ist. Das Modul umfasst zumindest eine Einrichtung aus der Gruppe von Einrichtungen bestehend aus Eingabeeinrichtung und Anzeigeneinrichtung, eine erste Befestigungseinrichtung, die in jeder gewählten Anbringposition an dem elektronischen Gerät mit einer zweiten Befestigungseinrichtung an dem elektronischen Gerät lösbar in Eingriff bringbar ist, und eine erste Kontaktierungseinrichtung, die in angebrachtem Zustand der Bedienvorrichtung an dem elektronischen Gerät eine zweite elektrische Kontaktierungseinrichtung, die Teil des elektronischen Gerätes ist, kontaktiert, um den Eingaben in die Eingabeeinrichtung entsprechende elektrische Signale an das elektronische Gerät weiterzuleiten und/oder Daten des elektronischen Gerätes auf der Anzeigeeinrichtung anzuzeigen.

Gemäß einem weiteren Aspekt der Erfindung wird ein elektronisches Gerät bereitgestellt, das zur lösbaren Aufnahme einer Ein- und Ausgabevorrichtung ausgebildet ist. Das elektronische Gerät umfasst eine Aufnahmevorrichtung zum lösbaren Anbringen einer Ein- und Ausgabevorrichtung, eine Kontaktierungseinrichtung, die unabhängig von der gewählten Position in angebrachtem Zustand der Ein- und Ausgabevorrichtung an dem elektronischen Gerät mit einer Kontaktierungseinrichtung, die sich an der Ein- und Ausgabevorrichtung befindet, elektrisch in Verbindung gelangt.

Ferner wird gemäß einer beispielhaften Ausführungsform der vorliegenden Erfindung eine Kombination aus elektronischem Gerät und Ein- und Ausgabevorrichtung vorgeschlagen, insbesondere eine Kombination aus mehreren elektronischen Geräten unterschiedlicher Bauart und/oder Messprinzipien, die jeweils die gleiche Aufnahme für eine daran anzubringende Ein- und Ausgabevorrichtung besitzen. Damit ist es erstmals möglich, mit nur einer Ein- und Ausgabevorrichtung mehrere elektronische Geräte zu bedienen bzw. deren Daten abzurufen und vor Ort unmittelbar am Gerät anzuzeigen.

Bei einem weiteren Ausführungsbeispiel einer erfindungsgemäßen Ein- und Ausgabevorrichtung umfasst die erste Kontaktierungseinrichtung mehrere Gruppen von Kontaktierungseinrichtungen und die Gruppen von Kontaktierungseinrichtungen sind zueinander beabstandet angeordnet. Ein Vorteil einer solchen Anordnung kann sein, dass an dem elektronischen Gerät nur eine zweite Kontaktierungseinrichtung vorhanden sein muss, die je nach der gewählten Position mit einer der Gruppen von Kontaktierungseinrichtungen an der Ein- und Ausgabevorrichtung in angebrachtem Zustand der Ein- und Ausgabevorrichtung in elektrischen Kontakt gelangt. Es ist selbstverständlich aber auch möglich, dass die zweite Kontaktierungseinrichtung, die sich an dem elektronischen Gerät befindet, mehrere Gruppen von Kontaktierungseinrichtungen umfasst und nur eine Kontaktierungseinrichtung an der Ein- und Ausgabevorrichtung vorhanden ist. Auch bei dieser beispielhaften Ausführungsform ist unabhängig von der gewählten Position gewährleistet, dass immer eine erste Kontaktierungseinrichtung und eine zweite Kontaktierungseinrichtung miteinander in elektrischen Kontakt gelangen.

Eine erste Kontaktierungseinrichtung kann zumindest eine elektrische Kontaktfläche umfassen und eine zweite Kontaktierungseinrichtung kann zumindest einen elektrischen Federkontakt umfassen, der mit der elektrischen Kontaktfläche in Kontakt gelangt. Es ist selbstverständlich aber auch möglich, dass die erste Kontaktierungseinrichtung als elektrischen Federkontakt ausgestaltet ist und die zweite Kontaktierungseinrichtung zumindest eine elektrische Kontaktfläche umfasst. Auch andere an sich im Stand der Technik bekannten lösbaren Kontaktverbindungen können in einer beispielhaften Ausführungsform der vorliegenden Erfindung eingesetzt werden.

Nach einem Ausführungsbeispiel einer erfindungsgemäßen Ein- und Ausgabevorrichtung ist an der Ein- und Ausgabevorrichtung eine erste Befestigungseinrichtung vorhanden, die in angebrachtem Zustand der Vorrichtung mit einer zweiten Befestigungseinrichtung, die an dem elektronischen Gerät ausgebildet ist, in lösbaren Eingriff gelangt. Durch diese Ausgestaltung kann die Ein- und Ausgabevorrichtung an dem elektronischen Gerät fixiert werden, vorzugsweise auch in der jeweils gewählten Position.

Eine beispielhafte Ausführungsform einer erfindungsgemäßen Ein- und Ausgabevorrichtung sieht vor, dass die erste Befestigungseinrichtung und die zweite Befestigungseinrichtung zusammen einen Bajonettverschluss bilden. Hierdurch ist durch leichte Axial- und Drehbewegung um einen bestimmten Winkelbereich eine sichere und zuverlässige Befestigung einer Ein- und Ausgabevorrichtung an dem elektronischen Gerät gewährleistet, jedoch ist die Verbindung auch wieder lösbar. Darüber hinaus ist bei einer derartigen Ausgestaltung es auf konstruktiv einfache Weise möglich, dass die Ein- und Ausgabevorrichtung in verschiedenen Stellungen bzw. Positionen an dem elektronischen Gerät befestigt werden kann und in jeder gewählten Position an dem elektronischen Gerät fixiert ist.

Insbesondere umfasst in einem Ausführungsbeispiel einer erfindungsgemäßen Ein- und Ausgabevorrichtung die erste Befestigungseinrichtung zumindest einen Zapfen und die zweite Befestigungseinrichtung zumindest eine Zapfenaufnahmeausnehmung, in die ein Zapfen beispielsweise durch eine kombinierte Axial- und Drehbewegung einführbar ist. Durch die Anzahl der Zapfen und Zapfenaufnahmeausnehmungen sind die Anzahl an wählbaren Positionen zum Anbringen der Ein- und Ausgabevorrichtung an dem elektronischen Gerät festlegbar. Insbesondere ist es zweckdienlich, wenn zumindest zwei Zapfen vorgesehen sind, die in vier Zapfenaufnahmeausnehmungen eingreifen, so dass zumindest zwei verschiedene Positionen einnehmbar sind, insbesondere vier verschiedene Positionen einnehmbar sind, die um jeweils 90° verdreht sind.

Um ein unbeabsichtigtes Lösen einer Ein- und Ausgabevorrichtung eher zu vermeiden, ist bei einer bevorzugten Ausführungsform einer erfindungsgemäßen Ein- und Ausgabevorrichtung zumindest eine der Zapfenaufnahmeausnehmungen mit einem Blockiermittel versehen. Insbesondere ist dieses Blockiermittel als Erhebung ausgebildet, die in der Zapfenaufnahmeausnehmung platziert ist und von dem Zapfen beim Verriegeln der ersten und zweiten Befestigungseinrichtung zu passieren ist.

Ein Ausführungsbeispiel einer erfindungsgemäßen Ein- und Ausgabevorrichtung weist eine Ober- und eine Unterseite auf. Die Oberseite ist dem Bediener zugewandt und umfasst zumindest eine Bedieneinrichtung und/oder eine Anzeigeeinrichtung. Die Bedien- und/oder die Anzeigeeinrichtung sind mit der ersten Kontaktierungseinrichtung verbunden. Auf der Unterseite ist die erste Kontaktierungseinrichtung vorhanden, die aus mehreren unterschiedlichen Stellen der Unterseite platzierte Kontaktierungsflächen oder Kontaktierungsfedern aufweist, wodurch eine Verbindung der zweiten Kontaktierungseinrichtung in jeder möglichen Befestigungsposition gewährleistet ist. Wie bereits zuvor erwähnt, ist es insbesondere vorteilhaft, zwei oder drei oder vier oder fünf Gruppen von Kontaktierungsflächen vorzusehen, die auf einem Kreisring gleichmäßig voneinander beabstandet sind, so dass, je nach Anzahl der Gruppen von Kontaktierungseinrichtungen, um 90°, 60° oder 45° sich unterscheidende Positionen der Ein- und Ausgabevorrichtung an dem elektrischen Gerät einnehmbar sind.

Bei einem weiteren Ausführungsbeispiel einer erfindungsgemäßen Ein- und Ausgabevorrichtung umfasst die Ein- und Ausgabevorrichtung einen Vorrichtungskörper, der wiederum an der Unterseite eines Aufnahmerings ausgebildet ist, der in einen entsprechenden Aufnahmering am elektronischen Gerät ein- bzw. darauf aufsteckbar ist.

Eine beispielhafte Ausführungsform einer Ein- und Ausgabevorrichtung gemäß der Erfindung umfasst zumindest eine Bedientaste und/oder zumindest eine Anzeigeeinrichtung.

Insbesondere ist die Anzeigeeinrichtung mit der ersten Kontaktierungseinrichtung verbunden, um elektrischen Strom für die Anzeigeneinrichtung von dem elektrischen Gerät zu erhalten und um Daten dieses elektronischen Geräts anzuzeigen.

Gemäß einem weiteren Aspekt der vorliegenden Erfindung umfasst eine Ein- und Ausgabevorrichtung eine Befestigungseinrichtung zum lösbaren Anbringen der Ein- und Ausgabevorrichtung an dem elektronischen Gerät und eine erste Kontaktierungseinrichtung, die in angebrachtem Zustand Ein- und Ausgabevorrichtungen an dem elektronischen Gerät mit einer zweiten Kontaktierungseinrichtung, die sich an dem elektronischen Gerät befindet, elektrisch in Verbindung gelangt. Eine solche Ein- und Ausgabevorrichtung muss nicht, kann aber auch so ausgestaltet sein, dass sie in zumindest zwei verschiedenen Positionen an dem elektronischen Gerät angebracht werden kann. Kern der Erfindung ist hier, dass die Ein- und Ausgabevorrichtung lösbar anbringbar ist.

Gemäß einem weiteren Aspekt der vorliegenden Erfindung ist ein Bedien- und Anzeigemodul geschaffen, wobei das Bedien- und Anzeigemodul zum lösbaren Anbringen an dem elektronischen Gerät in zumindest zwei verschiedenen Positionen ausgebildet ist und hierfür zumindest eine Einrichtung aus der Gruppe von Einrichtungen, bestehend aus Eingabeeinrichtungen und Anzeigeeinrichtungen, eine erste Befestigungseinrichtung, die in jeder gewählten Anbringposition an dem elektronischen Gerät mit einer zweiten Befestigungseinrichtung and dem elektronischen Gerät lösbar in Eingriff bringbar ist und eine erste Kontaktierungseinrichtung umfasst, die in angebrachtem Zustand der Bedienvorrichtung an dem elektronischen Gerät eine zweite elektronische Kontaktierungseinrichtung ein Teil des elektronischen Geräts ist, kontaktiert, um den Eingaben in die Eingabeeinrichtung entsprechend elektrische Signale an das elektronische Gerät weiterzuleiten.

Wie bereits zuvor erläutert, ist auch bei einem solchen Bedien- und Anzeigemodul bei einem bevorzugten Ausführungsbeispiel die erste Befestigungseinrichtung und die zweite Befestigungseinrichtung als Bajonettverschluss ausgebildet. Die Eingabeeinrichtung kann beispielsweise aus der Gruppe von Eingabeeinrichtungen bestehend aus Druckknopf, Schalter, Touchscreen, Taster, Rolle, Wippe und Joystick gewählt werden. Es ist auch möglich, unterschiedliche Eingabeeinrichtungen miteinander zu kombinieren.

Insbesondere ist bei einer bevorzugten Ausführungsform eines erfindungsgemäßen Bedien- und Anzeigemoduls das Modul im Wesentlichen zylindrisch geformt und passt in eine zylindrische Aufnahme des elektronischen Gerätes.

Gemäß einem weiteren Aspekt der vorliegenden Erfindung ist eine Kombination aus einer Ein- und Ausgabevorrichtung und zumindest einem elektronischen Gerät bereitgestellt. Kombination aus einer Ein- und Ausgabevorrichtung zum Eingeben von Daten und/oder zum Anzeigen von Informationen eines elektronischen Gerätes und zumindest einem elektronischen Gerät, wobei die Ein- und Ausgabevorrichtung zum lösbaren Anbringen an dem elektronischen Gerät in zumindest zwei verschiedenen Positionen ausgebildet ist und eine erste Kontaktierungseinrichtung aufweist, die unabhängig von der gewählten Position in angebrachtem Zustand der Ein- und Ausgabevorrichtung an dem elektronischen Gerät mit einer zweiten Kontaktierungseinrichtung, die sich an dem elektronischen Gerät befindet, elektrisch in Verbindung gelangt.

Das elektronische Gerät kann aus der Gruppe von Geräten bestehend aus beispielsweise Drucksensor, Füllstandssensor, Grenzwertgeber, Temperatursensor ausgewählt werden.

Bei einem bevorzugten Ausführungsbeispiel einer erfindungsgemäßen Kombination zeigt das elektronische Gerät eine Aufnahmeeinrichtung zum Aufnehmen der Ein- und Ausgabevorrichtung und eine Befestigungseinrichtung zum Fixieren der Ein- und Ausgabevorrichtung an dem elektronischen Gerät aufweist.

Bei einem bevorzugten Ausführungsbeispiel einer erfindungsgemäßen Kombination zeigt die Aufnahmeeinrichtung eine erste Steckeinrichtung und die Ein- und Ausgabevorrichtung umfasst eine zweite Steckeinrichtung.

Bei einem bevorzugten Ausführungsbeispiel einer erfindungsgemäßen Kombination zeigt die Befestigungseinrichtung zum Fixieren der Ein- und Ausgabevorrichtung an dem elektronischen Gerät ein separates Deckelelement.

Bei einem Ausführungsbeispiel einer erfindungsgemäßen Kombination weist das Deckelelement ein Innengewinde und das elektronische Gerät ein Außengewinde auf, wobei auf letzteres das Innengewinde aufschraubbar ist.

Bei einem weiteren Ausführungsbeispiel einer erfindungsgemäßen Kombination ist die Aufnahmevorrichtung zum lösbaren Anbringen einer Ein- und Ausgabevorrichtung in zumindest zwei verschiedenen Positionen ausgebildet.

Bei einem bevorzugten Ausführungsbeispiel einer erfindungsgemäßen Kombination umfasst die Kontaktierungseinrichtung zumindest eine Kontaktfeder.

Abschließend ist noch anzumerken, dass einzelne Merkmale einer Vorrichtung gemäß der Erfindung wie die zuvor erläuterte Ein -und Ausgabevorrichtung, das Bedien- und Anzeigemodul, das elektronische Gerät, die Kombination jeweils auch an den anderen verwirklicht sein kann.

### KURZE BESCHREIBUNG DER ZEICHNUNGEN

Im Folgenden sind zur weiteren Erläuterung und zum besseren Verständnis mehrere Ausführungsbeispiele der Erfindung unter Bezugnahme auf die beigefügten Zeichnungen beschrieben. Es zeigt:
- Fig. 1: eine Draufsicht einer erfindungsgemäßen Ein- und Ausgabevorrichtung bzw. eines Bedien- und Anzeigemoduls;
- Fig. 2: einen Schnitt der Ein- und Ausgabevorrichtung entlang der Linie A-A in Fig. 1;
- Fig. 3: eine Unteransicht der in der Fig. 1 gezeigten Ein- und Ausgabevorrichtung;
- Fig. 4: ein Detail der Innenseite eines Ringelements der in Fig. 1 bis 3 gezeigten Ein- und Ausgabevorrichtung;
- Fig. 5: eine schematisierte Schnittansicht eines Aufnahmeteils, das an einem elektronischen Gerät durch Schnappverriegelung befestigbar ist und zur Aufnahme einer Ein- und Ausgabevorrichtung gemäß den voranstehenden Figuren dient;
- Fig. 6: eine schematisierte Drauf- und Querschnittansicht einer ersten und zweiten Kontaktierungseinrichtung gemäß einer beispielhaften Ausführungsform der Erfindung;
- Fig. 7: eine schematisierte Querschnittansicht einer ersten und zweiten Kontaktierungseinrichtung gemäß einer weiteren beispielhaften Ausführungsform der Erfindung;

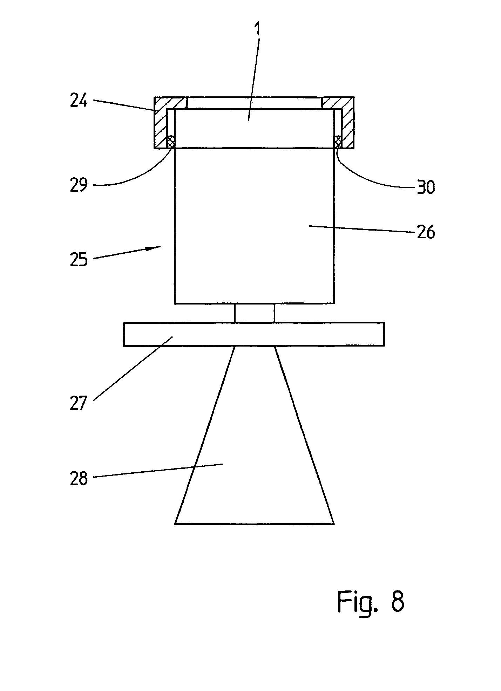

- Fig. 8: eine schematisierte Seitenansicht mit teilweise geschnittener Darstellung eines elektronischen Gerätes, das zur Aufnahme einer lösbar anbringbaren Ein- und Ausgabevorrichtung gemäß den voranstehenden Figuren ausgebildet ist;
- Fig. 9: eine schematisierte Darstellung, in welchen Gehäusen eine Ein- und Ausgabevorrichtung bzw. ein Anzeige- und Bedienmodul anbringbar ist, und
- Fig. 10: eine Darstellung von verschiedenen elektronischen Geräten gemäß der Erfindung, die mit einer erfindungsgemäßen Ein- und Ausgabevorrichtung verwendbar sind.

### BESCHREIBUNG VON BEISPIELHAFTEN AUSFÜHRUNGSBEISPIELEN DER VORLIEGENDEN ERFINDUNG

Aus der Draufsicht einer erfindungsgemäßen Ein- und Ausgabevorrichtung 1 gemäß der Erfindung ist die Oberseite 2 der Ein- und Ausgabevorrichtung 1 mit den darin enthaltenen Anzeigeeinrichtungen 3 und den Bedientasten 5, 6 gut ersichtlich. Die Ein- und Ausgabevorrichtung 1 hat einen im Wesentlichen zylindrischen Körper, der in einem oberen Teil zwei Griffmulden 4 aufweist. Die Griffmulden 4 liegen einander gegenüber und dienen zum besseren Handhaben der Ein- und Ausgabevorrichtung 1, insbesondere zum Drehen derselben.

Bei dem hier gezeigten Ausführungsbeispiel ist die Anzeigeeinrichtung 3 ein LCD-Display, das mittig in der Oberseite 2 der Ein- und Ausgabevorrichtung 1 platziert ist. Auf einer Längsseite der Anzeigeeinrichtung 3 sind Bedientasten 5, 6 platziert. Diese Bedientasten 5, 6 dienen dazu, menügesteuert das mit der Ein- und Ausgabevorrichtung zu verbindende elektronische Gerät, das nachfolgend später ausführlicher beschrieben werden wird, zu bedienen bzw. zu konfigurieren. Selbstverständlich können auch weniger oder mehr Tasten 5, 6 an einer erfindungsgemäßen Ein- und Ausgabevorrichtung 1 angebracht sein. Ferner wäre es selbstverständlich auch möglich, beispielsweise auf der anderen Längsseite der Anzeigeeinrichtung 3 andere Schalter bzw. Tasten oder Bedienelemente vorzusehen.

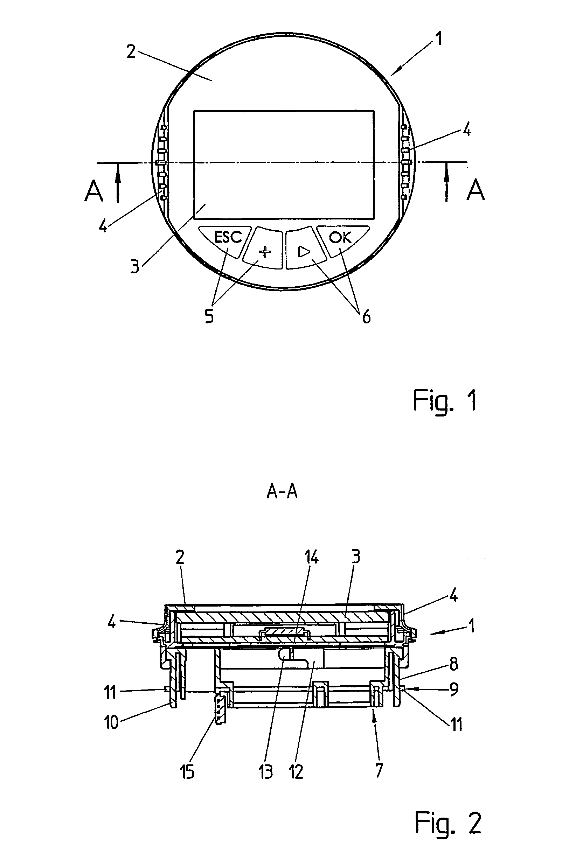

Die Fig. 2 zeigt einen Schnitt gemäß der Linie A-A von Fig. 1. Wie hieraus ersichtlich ist, ist hier die Ein- und Ausgabevorrichtung 1 bereits auf einem Aufnahmeteil 8, das normalerweise mit einem hier nicht dargestellten elektronischen Gerät fest verbunden ist, angebracht. Das Aufnahmeteil 8 ist hierbei durch Befestigungseinrichtungen 9, insbesondere Rastnasen 11 an dem elektronischen Gerät befestigt. So sitzt das Aufnahmeteil 8 mit der Unterseite 7 auf der Oberseite eines elektronischen Gerätes. Es weist eine elektrische Steckverbindung 15 auf, das mit der Elektronikeinheit eines elektronischen Gerätes, hier nicht gezeigt, verbunden ist. Diese elektrische Steckverbindung 15 ist mit einer später noch zu erläuternden elektrischen Kontaktierungseinrichtung des elektronischen Gerätes verbunden.

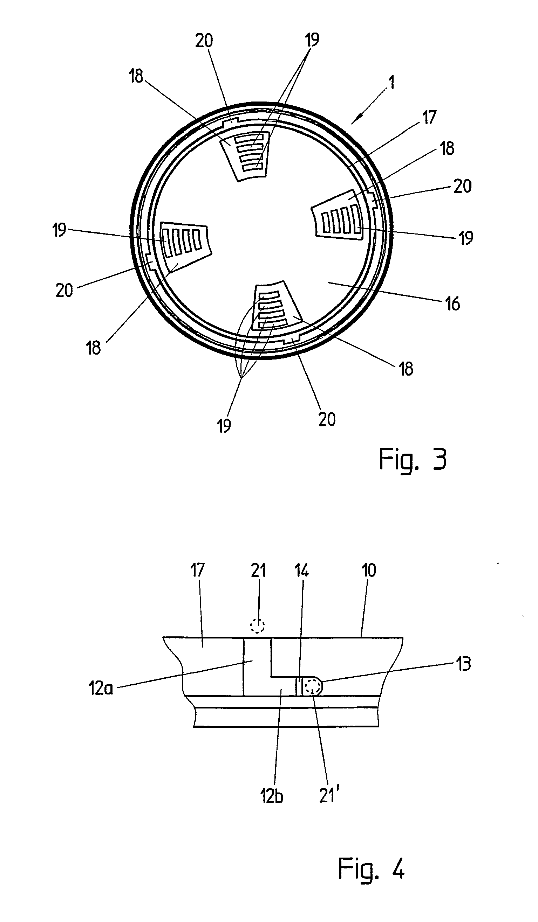

Insbesondere ist aus der Fig. 2 eine Zapfenaufnahmeausnehmung 12 ersichtlich, in der ein hier nicht dargestellter Zapfen einzubringen ist. Die Zapfenaufnahmeausnehmung besitzt in ihrem hinteren Teil eine Blockiererhebung 14, die einen Teil 13 der Zapfenaufnahmeausnehmung begrenzt. Die nähere Ausgestaltung dieser Befestigungseinrichtung wird unter Bezugnahme auf die Fig. 4 nachfolgend noch näher erläutert.

Weitere Details der erfindungsgemäßen Ein- und Ausgabevorrichtung 1 sind aus der Unteransicht gemäß der Fig. 3 ersichtlich. Die Ein- und Ausgabevorrichtung 1 besitzt, wie sehr gut sichtbar ist, einen zylindrischen Körper und dementsprechend ein Ringelement 10, in dem auf der hier sichtbaren Stirnseite die Zapfenaufnahmeausnehmung 12 enden. Diese Öffnungen der Zapfenaufnahmeausnehmungen 12 sind mit dem Bezugszeichen 20 versehen. Insgesamt sind an dem in Fig. 3 gezeigten Ausführungsbeispiel einer Ein- und Ausgabevorrichtung 1 vier, jeweils um 90° versetzte Zapfenaufnahmeausnehmungen 12 vorhanden, die auf der Stirnseite des Ringelements 10 in entsprechende Ausnehmungen oder Öffnungen 20 münden.

Das Ringelement 10 weist also an der Innenseite 17 jeweils die in Fig. 4 gezeigten Zapfenaufnahmeausnehmungen 12 auf. Das Ringelement 10 selbst wird, wie später noch erläutert wird, in ein entsprechendes Rohr- oder Zylinderstück eingefügt, das mit dem elektronischen Gerät verbunden ist.

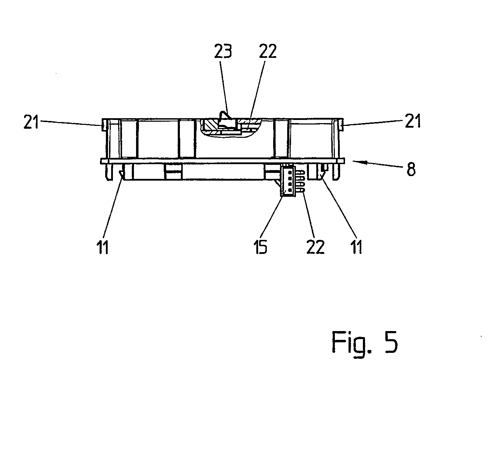

Die Unterseite 16 der Ein- und Ausgabevorrichtung 1 ist in angebautem Zustand der Vorrichtung dem elektronischen Gerät zugewandt. Hier sind vier Kreissegmentausschnitte 18 vorhanden, in denen jeweils mehrere Kontaktflächen 19 gruppiert sind. Jede Gruppe von Kontaktflächen 19 hat die Form eines Kreisringsegments. Diese Kontaktflächen 19 sind mit den Bedientasten 5, 6 bzw. der Anzeigeeinrichtung 3 über eine hier nicht gezeigte Leitung verbunden. Sie dienen zur Kontaktierung mit in der Fig. 5 näher erläuterten zweiten Kontaktierungseinrichtungen 23, die am elektronischen Gerät vorhanden sind. Bei der in Fig. 3 gezeigten Ausführungsform sind vier Gruppen von Kontaktierungseinrichtungen, also die Kontaktflächen 19, vorhanden, um die Ein- und Ausgabevorrichtung 1 in vier unterschiedlichen Positionen an dem elektronischen Gerät befestigen zu können und in jeder gewählten Position eine Kontaktierung mit den zweiten Kontaktierungseinrichtungen 23 des elektronischen Gerätes herstellen zu können.

Das zur Aufnahme dienende Aufnahmeteil 8 des elektronischen Gerätes ist schematisiert in der Fig. 5 teilweise geschnitten dargestellt. Wie hieraus ersichtlich, ist das Aufnahmeteil 8 auf der Oberseite mit mehreren Zapfen 21 ausgebildet, nämlich mindestens drei Zapfen, die in die dafür vorgesehenen Zapfenaufnahmeausnehmungen 12 bzw. deren zugehörigen Öffnungen 20 einzuführen sind. Auf der gegenüberliegenden Seite sind mehrere Rastnasen 11 vorhanden, die in ein entsprechendes Gegenstück am elektronischen Gerät festzuhaken sind, so dass das Aufnahmeteil 8 und das elektronische Gerät fest miteinander verbunden sind. Das Aufnahmeteil 8 hat eine rohrförmige Ausbildung, an dessen Außenseite die Zapfen 21 angebracht sind, so dass auf die Außenseite der die Innenseite 17 des der Ein- und Ausgabevorrichtung 1 aufzusetzen sind und durch eine Axial- und Drehbewegung, wie es für Bajonettverschlüsse üblich ist, die Fixierung in der gewünschten Position der Ein- und Ausgabevorrichtung 1 auf dem Aufnahmeteil 8 gesichert ist.

Schematisch ist in der Fig. 5 auch die zweite Kontaktierungseinrichtung 23 in Form einer bzw. mehrerer Kontaktfedern 23 gezeigt, die mit einer elektrischen Leitung 22 mit der bereits zuvor erläuterten elektrischen Steckverbindung 15 verbunden sind. Die elektrische Steckverbindung 15 ist dann wiederum mit dem elektronischen Gerät verbindbar.

Die elektrischen Kontaktfedern 23 sind bei der in der Fig. 5 gezeigten Darstellung aus der horizontalen umgebogen, um eine Kontaktierung mit den jeweiligen Kontaktflächen 19 der Ein- und Ausgabevorrichtung 1 in aufgesetztem Zustand auf dem elektronischen Gerät auch bei unterschiedlichem Abstand der Kontaktflächen von der Kontaktfeder sicherzustellen. Werden die Ein- und Ausgabevorrichtungen 1 gemäß den Fig. 1 bis 4 und das Aufnahmeteil 8 des elektronischen Gerätes, hier nicht dargestellt, verbunden, so müssen nur eine Gruppe von Kontaktfedern 23 vorhanden sein, die mit einer Gruppe von Kontaktflächen 19 kontaktieren. Selbstverständlich ist es aber auch möglich, dass mehrere Gruppen von Kontaktfedern 23 an dem Aufnahmeteil 8 vorhanden sind und nur eine Gruppe von Kontaktflächen 19 an der Ein- und Ausgabevorrichtung 1 vorgesehen sind.

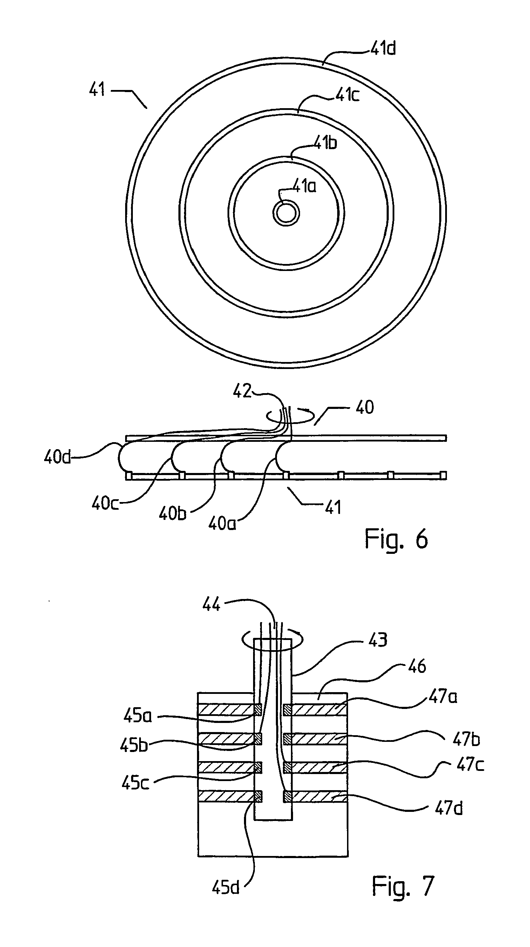

Aus den Drauf- bzw. Schnittansichten gemäß der Fig. 6 ist eine weitere beispielhafte Ausführungsform der vorliegenden Erfindung miteiner ersten Kontaktierungseinrichtung 40 und einer zweiten Kontaktierungseinrichtung 41 ersichtlich. Die erste Kontaktierungseinrichtung 40 umfasst mehrere radial beabstandete Kontaktfedern 40a, 40b, 40c, 40d, die über Leitungen 42 mit zugehörigen elektrischen oder elektronischen Einrichtungen des Anzeige- und Bedienmoduls verbunden sind. Es ist somit festzustellen, dass die ersten Kontaktierungseinrichtungen 40a - 40d an dem Anzeige- und Bedienmodul angebracht sind.

Die zweite Kontaktierungseinrichtung umfasst ringförmige Leiterbahnen 41a, 41b, 41c, 41d, die konzentrisch zueinander angeordnet sind. Die Leiterbahnen 41a- 41d sind Teil eines elektronischen Gerätes, das mit einem Anzeige- und Bedienmodul umfassend die ersten Kontaktierungseinrichtungen 40a - 40d lösbar verbindbar sein soll. Wie sich aus der Darstellung gemäß der Fig. 6 ergibt, sind die Kontaktfedern 40a - 40d so angeordnet, dass sie in aufgesetztem Zustand des Anzeige- und Bedienmoduls mit den einzelnen Leiterbahnen 41a - 41d kontaktieren. Durch die konzentrisch Ausgestaltung ist in jeder beliebigen Drehstellung des Anzeige- und Bedienmoduls eine Kontaktierung gewährleistet. Damit ist es problemlos möglich, das Anzeige- und Bedienmodul am elektronischen Gerät so zu betreiben, dass ein Bediener bzw. Betrachter sich jeweils die für ihn günstigste Position einstellen kann.

Noch eine weitere beispielhafte Ausführungsform der Erfindung miteiner ersten Kontaktierungseinrichtung und einer zweiten Kontaktierungseinrichtung ist in der schematisierten Darstellung gemäß der Fig. 7 gezeigt. Hier umfasst die erste Kontaktierungseinrichtung einen Zapfen 43, der am Außenumfang in verschiedenen Höhen Schleifringe 45a, 45b, 45c und 45d aufweist. Diese Schleifringe 45a - 45d sind jeweils mit Leitungen 44 verbunden, die zu einzelnen elektrischen oder elektronischen Einrichtungen eines Anzeige- und Bedienmoduls führen.

Ein elektronisches Gerät, das mit einem entsprechenden Anzeige- und Bedienmodul zu verbinden ist, besitzt eine Aufnahmebohrung 46, an dessen Innenumfang in verschiedenen Höhen einzelne Kontaktierungsringe 47a, 47b, 47c und 47d angeordnet sind. Durch Einführen des Zapfens 43 in die Aufnahmebohrung 46 gelangen die ersten Kontaktierungseinrichtungen 45a-45e mit den zweiten Kontaktierungseinrichtungen 47a - 47d in elektrischen Kontakt. Durch die Zapfenausbildung ist eine Verdrehung des Zapfens 43 in der Aufnahmebohrung 46 unter Beibehaltung einer elektrische Kontaktierung zwischen den ersten und zweiten Kontaktierungseinrichtungen möglich. Damit wird der gleiche Erfolg erzielt wie bei der Ausführungsform gemäß der Fig. 6.

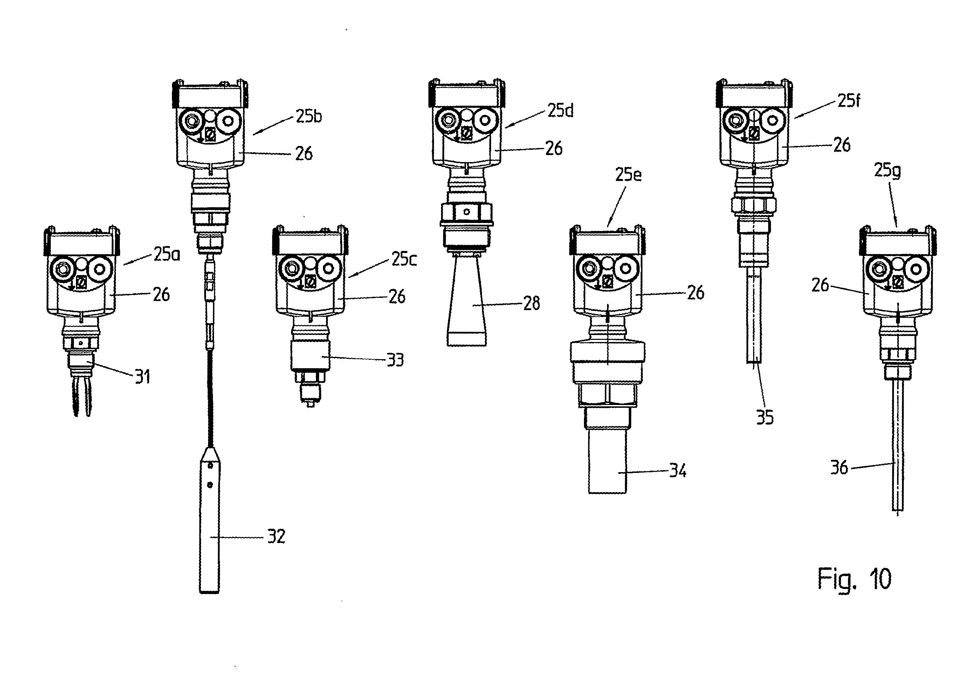

In der schematisierten, teilweise ausgebrochenen Darstellung der Fig. 10 ist ein elektronisches Gerät 25 mit aufgesetzter Ein- und Ausgabevorrichtung 1 gezeigt. Das elektronische Gerät 25 ist hier ein Füllstandradar, das eine Elektronikeinheit 26 mit Gehäuse, ein Befestigungsflansch 27 und eine Homantenne 28 umfasst. Auf der Oberseite des Gehäuses 26 ist ein Außengewinde 29 vorhanden, in das ein Innengewinde 30 eines Deckelelementes 24 aufgeschraubt ist. Das Deckelelement 24 hat eine Durchbrechung 37, so dass die darunter liegende, hier nur schematisch angedeutete Anzeigeeinrichtung der Ein- und Ausgabevorrichtung 1 für einen Betrachter sichtbar ist. Darüber hinaus sind natürlich auch die Bedientasten 5, 6 der Ein- und Ausgabevorrichtung 1 für einen Bediener erreichbar. Wie aus der Fig. 10 ersichtlich, ist nach Aufbringen der Ein- und Ausgabevorrichtung lauf das Aufnahmeteil 8 die Ein- und Ausgabevorrichtung 1 mittels des Deckelelementes 24 gesichert. Unter Umständen reicht es auch aus, dass die Ein- und Ausgabevorrichtung 1 nur über das Deckelelement 24 durch Klemmung auf dem Gehäuse 26 des elektronischen Gerätes 25 befestigt wird.

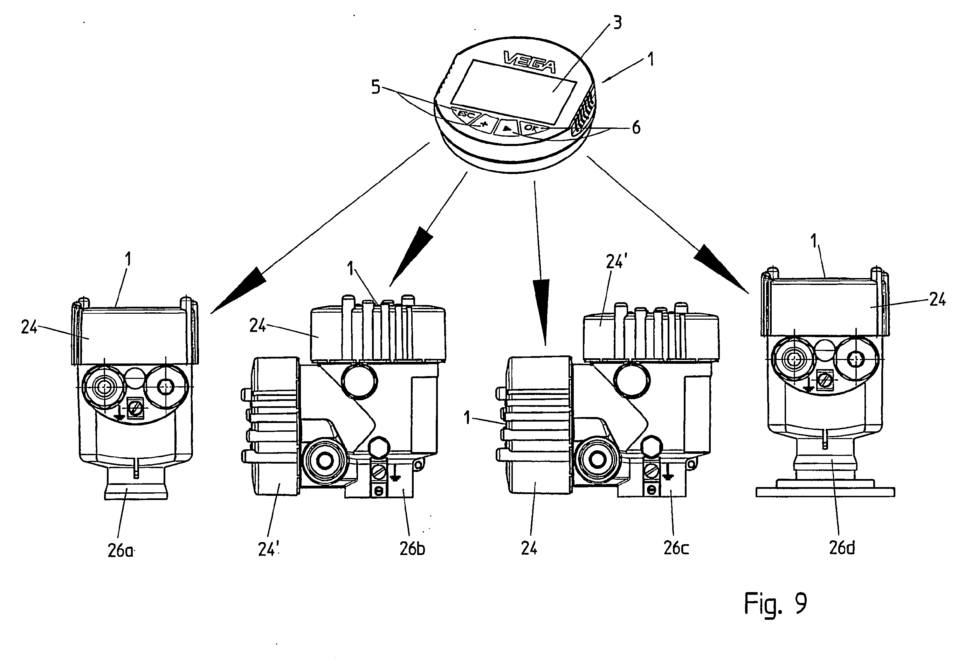

Die Fig. 9 zeigt schematisch die verschiedenen Verwendungen einer einzigen Ein- und Ausgabevorrichtung 1, wie sie zuvor erläutert wurde, auf verschiedenen Gehäusen 26a - 26d. So ist das Gehäuse 26a eines elektronischen Gerätes ein 1-Kammer-Gehäuse, das für verschiedenste elektronische Geräte, die in der Fig. 10 näher erläutert sind, verwendbar ist. An diesem Gehäuse 26a ist die Ein- und Ausgabevorrichtung 1 aufbringbar und mittels des Deckels 24 verschraubbar.

Das Gehäuse 26b ist ein Zwei-Kammer-Gehäuse, das zwei Möglichkeiten zum Aufbringen der Ein- und Ausgabevorrichtung 1 aufweist, einmal oben, einmal seitlich. Jeweils ist ein Deckel 24 oder 24' (dieser unterscheidet sich zu dem Deckel 24 dadurch, dass er keine Durchbruchsöffnung aufweist) verschraubbar.

An dem Gehäuse 26c ist die unterschiedliche Anbringung der Ein- und Ausgabevorrichtung 1 sichtbar. Eine weitere Gehäuseausbildung 26d ist in der Fig. 9 rechts gezeigt. Hier dient die Ein- und Ausgabevorrichtung 1 nur der Anzeige. Es sollen keine Bedienungen möglich sein, dazu können auch bei der Ein- und Ausgabevorrichtung 1 die Bedientasten 6 , 7 weggelassen werden.

Zusammenfassend ist also festzustellen, dass die Ein- und Ausgabevorrichtung 1 auf verschiedenen Gehäusen, die zur Aufnahme der Ein- und Ausgabevorrichtung 1 ausgebildet sind, angebracht werden kann und entsprechend als Bedien- und Anzeigemodul verwendbar ist; dies im Übrigen unabhängig von dem Messprinzip, auf dem das elektronische Gerät basiert. Ferner können die Gehäuse 26a- 26d aus unterschiedlichen Materialien bestehen. So kann es sich je nach Verwendungszweck beispielsweise um ein Kunststoffgehäuse, ein V4A-Gehäuse oder ein Alugehäuse handeln.

Die mit einem solchen Gehäuse und einer erfindungsgemäßen Ein- und Ausgabevorrichtung 1 verwendbaren elektronischen Messgeräte sind beispielhaft in der Fig. 10 dargestellt. So ist in der Fig. 10 ganz links ein Messgerät gezeigt, das als Sensor eine Schwinggabel 31 umfasst. Das Messgerät wird an sich unter der Bezeichnung "VEGASWING" verkauft. Hier hat es ein erfindungsgemäßes Gehäuse mit Aufnahmeteil und aufbringbarer Ein- und Ausgabevorrichtung 1. Des Weiteren ist ein Deckel 24 darauf verschraubbar.

Das zweite elektronische Gerät von links ist ein TDR-Füllstandsensor 25b, der ein Tragteil 32 mit Gewicht aufweist, an dem eine Mikrowelle geführt zum Füllgut abgesandt wird und reflektierte Echos zu dem Gerät zurücklaufen. Auch dieses elektronische Gerät 25b hat ein Gehäuse 26 zur Aufnahme einer Ein- und Ausgabevorrichtung 1 mit Deckel 24. Das rechts neben dem vorgenannten elektronischen Gerät 25b gezeigte elektronische Gerät 25c ist ein Drucksensor, der ebenfalls wieder ein gleiches Gehäuse 26 zum Anbringen einer Ein- und Ausgabevorrichtung 1 und Deckelelement 24 aufweist.

Rechts neben dem Drucksensor 25c ist ein Füllstandradarsensor 25d gezeigt, der eine Homantenne 28 aufweist. Wiederum ist das Gehäuse 26 in der zuvor beschriebenen Weise ausgebildet. Rechts neben dem Füllstandsradar 25d ist ein weiteres Füllstandradar 25e gezeigt, das hier mit einer anderen Antenne 34 (vollverkleidete Antenne) ausgestattet ist. Das Gehäuse 26 ist wie bei dem Füllstandradar 25d ausgebildet.

Weiter rechts ist ein Grenzstanderfassungssensor 25f gezeigt, der einen Schwingstab 35 aufweist. Wiederum hat er ein Gehäuse 26 der zuvor beschriebenen Bauart mit Deckelelement 24, wobei an dem Gehäuse 26 die eingehend zuvor erläuterte Ein- und Ausgabevorrichtung 1 anbringbar ist.

Schließlich ist in der Fig. 10 ganz rechts ein kapazitiver Füllstandsgeber 25g gezeigt, der einen elektronischen Stab 36 aufweist. Wiederum ist dieser Füllstandsensor mit einem Gehäuse 26 der zuvor beschriebenen Bauart ausgestattet.

Es ist somit gut ersichtlich, dass alle verschiedenen Messprinzipien und die entsprechenden Sensoren mit ein und derselben Ein- und Ausgabevorrichtung 1 ausgestattet werden können, wofür auch die Gehäuse zu diesem Zweck gleich ausgestaltet sind. Damit ist eine einfache und modulhafte Auswechslung einer Ein- und Ausgabevorrichtung 1 an verschiedenen Sensoren möglich. Gleichzeitig ist ermöglicht, dass ein Bediener unabhängig von dem vorhandenen Sensor immer die gleiche Bedienung durch die Ein- und Ausgabevorrichtung 1 vor Augen hat, entsprechend ist auch die Menüführung ähnlich.

## Patentansprüche

1. Ein- und Ausgabevorrichtung (1) zum Eingeben von Daten und/oder zum Anzeigen von Informationen eines elektronischen Gerätes (25), wobei die Ein- und Ausgabevorrichtung (25) zum lösbaren Anbringen an dem elektronischen Gerät (25) in zumindest zwei verschiedenen Positionen ausgebildet ist und eine erste Kontaktierungseinrichtung (19; 40; 45) aufweist, die unabhängig von der gewählten Position in angebrachtem Zustand der Ein- und Ausgabevorrichtung (1) an dem elektronischen Gerät (25) mit einer zweiten Kontaktierungseinrichtung (23; 41; 47), die sich an dem elektronischen Gerät (25) befindet, elektrisch in Verbindung gelangt;
**dadurch gekennzeichnet daß** die erste order zweite Kontaktierungseinrichtung zumindest eine elektrische Kontaktfläche (19; 40a-40d; 45a-45d) umfasst.

2. Ein- und Ausgabevorrichtung (1) nach Anspruch 1, wobei die erste oder zweite Kontaktierungseinrichtung mehrere Gruppen von Kontaktierungseinrichtungen (19; 40a-40d; 45a-45d) umfasst und die Gruppen von Kontaktierungseinrichtungen (19; 40a-40d; 45a-45d) zueinander beabstandet angeordnet sind.

3. Ein- und Ausgabevorrichtung (1) nach Anspruch 1, wobei die Kontaktflächen an mehreren unterschiedlichen Stellen platziert sind.

4. Ein- und Ausgabevorrichtung (1) nach Anspruch 1 oder 2, wobei die erste oder zweite Kontaktierungseinrichtung aus zumindest einem elektrischen Federkontakt (23; 4 1 a-41d; 47a-47d) besteht.

5. Ein- und Ausgabevorrichtung (1) nach einem der voranstehenden Ansprüche, wobei eine erste Befestigungseinrichtung (9) an der Ein- und Ausgabevorrichtung (1) vorhanden ist, die in angebrachtem Zustand der Ein- und Ausgabevorrichtung (1) mit einer zweiten Befestigungseinrichtung (10) an dem elektronischen Gerät (25) in lösbaren Eingriff gelangt.

6. Ein- und Ausgabevorrichtung (1) nach Anspruch 5, wobei die erste Befestigungseinrichtung (9) und die zweite Befestigungseinrichtung (10) zusammen einen Bajonettverschluss bilden.

7. Ein- und Ausgabevorrichtung nach Anspruch 5 oder 6, wobei die erste Befestigungseinrichtung zumindest einen Zapfen (21) umfasst, und die zweite Befestigungseinrichtung zumindest eine Zapfenaufnahmeausnehmung (12) umfasst, in die ein Zapfen (21) durch eine kombinierte Axial- und Drehbewegung einführbar ist.

8. Ein- und Ausgabevorrichtung (1) nach Anspruch 7, wobei zumindest eine der Zapfenaufnahmeausnehmungen (12) mit einem Blockiermittel (14) versehen ist, um ein versehentliches Lösen der ersten und zweiten Befestigungseinrichtungen (12; 21) zu verhindern.

9. Ein- und Ausgabevorrichtung nach Anspruch 8, wobei das Blockiermittel eine Erhebung (14) ist, die in der Zapfenaufnahmeausnehmung (12) platziert ist und von dem Zapfen (21) beim Verriegeln der ersten und der zweiten Befestigungseinrichtung (12; 21) zu passieren ist.

10. Ein- und Ausgabevorrichtung (1) nach einem der voranstehenden Ansprüche, wobei die Ein- und Ausgabevorrichtung (1) eine Ober- (2) und eine Unterseite (7) hat, von denen die Oberseite (2) einem Bediener zugewandt ist und zumindest eine Bedieneinrichtung (5, 6) aufweist, die mit der ersten Kontaktierungseinrichtung (19; 40; 45) in Verbindung steht, und wobei auf der Unterseite (7) die erste Kontaktierungseinrichtung (19; 40; 45) vorhanden ist.

11. Ein- und Ausgabevorrichtung (1) nach einem der voranstehenden Ansprüche, wobei die Ein- und Ausgabevorrichtung (1) einen Vorrichtungskörper umfasst, der an der Unterseite (7) als Aufnahmering (10) ausgebildet ist.

12. Ein- und Ausgabevorrichtung (1) nach einem der voranstehenden Ansprüche, wobei die Ein- und Ausgabevorrichtung (1) zumindest eine Bedientaste (5, 6) umfasst.

13. Ein- und Ausgabevorrichtung (1) nach einem der voranstehenden Ansprüche, wobei die Ein- und Ausgabevorrichtung (1) zumindest eine Anzeigeeinrichtung (3) umfasst.

14. Ein- und Ausgabevorrichtung (1) nach Anspruch 13, wobei die Anzeigeeinrichtung aus der Gruppe von Anzeigeeinrichtungen bestehend aus LCD-Display, OLED-Display und PLED-Display gewählt ist.

15. Ein- und Ausgabevorrichtung (1) nach Anspruch 13 oder 14, wobei die Anzeigeeinrichtung (3) mit der ersten Kontaktierungseinrichtung (19; 40; 45) verbunden ist, um elektrischen Strom für die Anzeigeeinrichtung (3) von dem elektrischen Gerät (25) zu erhalten und um Daten des elektronischen Gerätes (25) anzuzeigen.

16. Ein- und Ausgabevorrichtung (1) nach einem der voranstehenden Ansprüche, wobei die Ein- und Ausgabevorrichtung (1) als Modul ausgebildet ist, das an mehreren unterschiedlichen elektronischen Geräten (25) lösbar anbringbar ist.

17. Ein- und Ausgabevorrichtung (1) nach einem der voranstehenden Ansprüche, wobei die Eingabeeinrichtung zumindest eine Eingabeeinrichtung aus der Gruppe von Eingabeeinrichtungen bestehend aus Druckknopf, Schalter, Touchscreen, Taster, Rolle, Wippe und Joystick umfasst.

18. Ein- und Ausgabevorrichtung (1) nach einem der voranstehenden Ansprüche, wobei die Ein- und Ausgabevorrichtung (1) im wesentlichen zylindrisch ist und in eine zylindrische Aufnahme des elektronischen Gerätes (25) passt.

19. Kombination umfassend:
- eine Ein- und Ausgabevorrichtung (1) nach einem der Ansprüche 1 bis 18 zum Eingeben von Daten und/oder zum Anzeigen von Informationen eines elektronischen Gerätes (25), wobei die Ein- und Ausgabevorrichtung (25) zum lösbaren Anbringen an dem elektronischen Gerät (25) in zumindest zwei verschiedenen Positionen ausgebildet ist und eine erste Kontaktierungseinrichtung (19; 40; 45) aufweist,
und
- zumindest ein elektronische Gerät (2), das zum Aufnehmen und lösbaren Anbringen der Ein- und Ausgabevorrichtung (1) in zumindest zwei verschiedenen Positionen ausgebildet ist und eine zweite Kontaktierungseinrichtung (23; 41; 47), aufweist,
wobei die erste Kontaktierungseinrichtung (19; 40; 45) und die zweite Kontaktierungseinrichtung (23; 41; 47) so ausgebildet sind, dass sie unabhängig von der gewählten Position in angebrachtem Zustand der Ein- und Ausgabevorrichtung (25) an dem zumindest einen elektronischen Gerät (25) elektrisch in Verbindung gelangen.

20. Kombination nach Anspruch 19, wobei das elektronische Gerät (25) aus der Gruppe von Geräten bestehend aus Drucksensor, Füllstandssensor, Grenzwertgeber und Temperatursensor auswählbar ist.

21. Kombination nach Anspruch 19 oder 20, wobei das elektronische Gerät (25) eine Aufnahmeeinrichtung (26) zum Aufnehmen der Ein- und Ausgabevorrichtung und eine Befestigungseinrichtung (24) zum Fixieren der Ein- und Ausgabevorrichtung an dem elektronischen Gerät (25) aufweist.

22. Kombination nach Anspruch 21, wobei die Aufnahmeeinrichtung eine erste Steckeinrichtung umfasst und die Ein- und Ausgabevorrichtung eine zweite Steckeinrichtung umfasst.

23. Kombination nach Anspruch 21, wobei die Befestigungseinrichtung zum Fixieren der Ein- und Ausgabevorrichtung (1) an dem elektronischen Gerät (25) ein separates Deckelelement (24) ist.

24. Kombination nach Anspruch 24, wobei das Deckelelement (24) ein Innengewinde aufweist und das elektronische Gerät (25) ein Außengewinde umfasst, auf das das Innengewinde aufschraubbar ist.

25. Elektronisches Gerät (25) umfassend eine Aufnahmevorrichtung (26) nach einem der Ansprüche 1 bis 18 zum lösbaren Anbringen einer Ein- und Ausgabevorrichtung (1) und eine Kontaktierungseinrichtung (23; 41; 47), die so ausgebildet ist, dass sie in angebrachtem Zustand der Ein- und Ausgabevorrichtung (1) an dem elektronischen Gerät (25) in zumindest zwei unterschiedlichen Positionen der Ein- und Ausgabeeinrichtung (1) mit einer Kontaktierungseinrichtung (19; 40; 45, die sich an der Ein- und Ausgabevorrichtung (1) befindet, elektrisch in Verbindung gelangt.

## Claims

1. An input and output device (1) for inputting data and/or for displaying information of an electronic device (25), wherein the input and output device (25) is adapted for detachable connection to the electronic device (25) in at least two different positions and comprises a first contacting device (19; 40; 45), which, independent from the selected position in the connected state of the input and output device (1) on the electronic device (25), establishes an electrical connection with a second contacting device (23; 41; 47) that is located on the electronic device (25),
**characterised in that** the first or the second contacting device comprises at least one electrical contact face (19; 40a-40d; 45a-45d).

2. Input and output device (1) according to claim 1, wherein the first or the second contacting device comprises several groups of contacting devices (19; 40a-40d; 45a-45d), and wherein the groups of contacting devices (19; 40a-40d; 45a-45d) are arranged so as to be spaced apart from each other.

3. Input and output device (1) according to claim 1, wherein the contact faces are placed at several different positions.

4. Input and output device (1) according to claim 1 or 2, wherein the first or the second contacting device comprises at least one electrical spring contact (23; 41a-41d; 47a-47d).

5. Input and output device (1) according to any one of the preceding claims, wherein the input and output device (1) comprises a first fastening device (9), which in the connected state of the input and output device (1) establishes detachable engagement with a second fastening device (10), which is in place on the electronic device (25).

6. Input and output device (1) according to claim 5, wherein the first fastening device (9) and the second fastening device (10) together form a bayonet socket.

7. Input and output device (1) according to claim 5 or 6, wherein the first fastening device comprises at least one stud (21), and wherein the second fastening device comprises at least one stud-receiving recess (12) into which a stud (21) can be inserted by a combined axial- and rotary movement.

8. Input and output device (1) according to claim 7, wherein at least one of the stud-receiving recesses (12) comprises a blocking means (14) in order to prevent unintended detachment of the first and second fastening devices (12; 21).

9. Input and output device (1) according to claim 8, wherein the blocking means is an elevation (14) which is placed in the stud-receiving recess (12), which elevation (14) the stud (21) has to pass when the first and the second fastening devices (12; 21) are locked.

10. Input and output device (1) according to any one of the preceding claims, wherein the input and output device (1) comprises a top (2) and a bottom (7), with the top facing an operator, and comprises at least one control device (5, 6) which is connected to the first contacting device (19; 40; 45), and wherein on the bottom (7) the first contacting device (19; 40; 45) is located.

11. Input and output device (1) according to any one of the preceding claims, wherein the input and output device (1) comprises a device body which on the bottom (7) is designed as a receiving ring (10).

12. Input and output device (1) according to any one of the preceding claims, wherein the input and output device (1) comprises at least one control button (5, 6).

13. Input and output device (1) according to any one of the preceding claims, wherein the input and output device (1) comprises at least one display device (3).

14. Input and output device (1) according to claim 13, wherein the display device is selected from the group of display devices comprising an LCD display, OLED display and PLED display.

15. Input and output device (1) according to claim 13 or 14, wherein the display device (3) is connected to the first contacting device (19; 40; 45) in order to receive electrical current for the display device (3) from the electrical device (25), and in order to display data of the electronic device (25).

16. Input and output device (1) according to any one of the preceding claims, wherein the input and output device (1) is adapted as a module that can be detachably connected to several different electronic devices (25).

17. Input and output device (1) according to any one of the preceding claims, wherein the input device comprises at least one input device from the group of input devices comprising a push button, switch, touch screen, key button, roller, rocker button and joystick.

18. Input and output device (1) according to any one of the preceding claims, wherein the input and output device (1) is essentially cylindrical and fits into a cylindrical receiving part of the electronic device (25).

19. A combination comprising:
- an input and output device (1) according to any one of claims 1 to 18 for inputting data and/or for displaying information of an electronic device (25), wherein the input and output device (25) is adapted for detachable connection to the electronic device (25) in at least two different positions and comprises a first contacting device (19; 40; 45); and
- at least one electronic device (2), which is designed for receiving and for detachable connection of the input and output device (1) in at least two different positions and comprises a second contacting device (23; 41; 47),
wherein the first contacting device (19; 40; 45) and the second contacting device (23; 41; 47) are designed such that independent from the selected position in the connected state of the input and output device (25) they establish an electrical connection on the electronic device (25), of which there is at least one.

20. Combination according to claim 19, wherein the electronic device (25) can be selected from the group of devices comprising a pressure sensor, fill-level sensor, limit value transmitter and temperature sensor.

21. The combination according to claim 19 or 20, wherein the electronic device (25) comprises a receiving device (26) for receiving the input and output device, and a fastening device (24) for fastening the input and output device to the electronic device (25).

22. Combination according to claim 21, wherein the receiving device comprises a first plug-in device, and the input and output device comprises a second plug-in device.

23. Combination according to claim 21, wherein the fastening device for fastening the input and output device (1) to the electronic device (25) comprises a separate cover element (24).

24. Combination according to claim 24, wherein the cover element (24) comprises an internal screw thread, and the electronic device (25) comprises an external screw thread, wherein the internal screw thread can be screwed onto the external screw thread.

25. An electronic device (25) comprising a receiving device (26) according to any one of claims 1 to 18 for detachable connection of an input and output device (1) and a contacting device (23; 41; 47) which is designed such that in the connected state of the input and output device (1) on the electronic device (25) it establishes an electrical connection in at least two different positions of the input and output device (1) to a contacting device (19; 40; 45) that is located on the input and output device (1)..

## Revendications

1. Dispositif de saisie et d'édition (1), pour entrer des données et/ou pour afficher des informations d'un appareil électronique (25), dans lequel le dispositif de saisie et d'édition (25) est réalisé pour être monté de manière amovible sur l'appareil électronique (25) dans au moins deux positions différentes et comporte un premier dispositif de contact (19 ; 40 ; 45) qui, indépendamment de la position choisie, vient électriquement en contact avec un deuxième dispositif de contact (23 ; 41 ; 47) qui se situe sur l'appareil électronique (25), lorsque le dispositif de saisie et d'édition (1) est monté sur l'appareil électronique (25) ;
**caractérisé en ce que** le premier ou le deuxième dispositif de contact comporte au moins une surface de contact électrique (19 ; 40a-40d ; 45a-45d).

2. Dispositif de saisie et d'édition (1) selon la revendication 1, dans lequel le premier ou le deuxième dispositif de contact comporte plusieurs groupes de dispositifs de contact (19 ; 40a-40d ; 45a-45d) et les groupes de dispositifs de contact (19 ; 40a-40d ; 45a-45d) sont disposés à distance les uns des autres.

3. Dispositif de saisie et d'édition (1) selon la revendication 1, dans lequel les surfaces de contact sont placées en plusieurs emplacements différents.

4. Dispositif de saisie et d'édition (1) selon la revendication 1 ou 2, dans lequel le premier ou le deuxième dispositif de contact est constitué d'au moins un contact électrique à ressort (23 ; 41a-41d ; 47a-47d).

5. Dispositif de saisie et d'édition (1) selon l'une des revendications précédentes, dans lequel un premier dispositif de fixation (9) est présent sur un dispositif de saisie et d'édition (1) qui, lorsque le dispositif de saisie et d'édition (1) est à l'état monté, vient en prise amovible avec un deuxième dispositif de fixation (10) sur un appareil électronique (25).

6. Dispositif de saisie et d'édition (1) selon la revendication 5, dans lequel le premier dispositif de fixation (9) et le second dispositif de fixation (10) forment ensemble une fermeture à baïonnette.

7. Dispositif de saisie et d'édition (1) selon la revendication 5 ou 6, dans lequel le premier dispositif de fixation comprend au moins un taquet (21) et le deuxième dispositif de fixation comprend au moins un évidement pour taquet (12) dans lequel un taquet (21) peut être introduit par un mouvement combiné axial et rotatif

8. Dispositif de saisie et d'édition (1) selon la revendication 7, dans lequel l'un au moins des évidements pour taquet (12) est pourvu d'un moyen de blocage (14), pour empêcher un détachement inopiné des premiers et deuxièmes dispositifs de fixation (12 ; 21).

9. Dispositif de saisie et d'édition selon la revendication 8, dans lequel le moyen de blocage est une élévation (14) qui est placée dans l'évidement pour taquet (12) et qui doit être franchie par le taquet (21) lors du verrouillage du premier et du deuxième dispositifs de fixation (12 ; 21).

10. Dispositif de saisie et d'édition (1) selon l'une des revendications précédentes, dans lequel le dispositif de saisie et d'édition (1) présente un côté supérieur (2) et un côté inférieur (7), parmi lesquels le côté supérieur (2) est tourné vers l'opérateur et présente au moins un dispositif de commande (5, 6) qui est en liaison avec le premier dispositif de contact (19 ; 40 ; 45), et dans lequel le premier dispositif de contact (19 ; 40 ; 45) est présent sur le côté inférieur (7).

11. Dispositif de saisie et d'édition (1) selon l'une des revendications précédentes, dans lequel le dispositif de saisie et d'édition (1) comprend un corps de dispositif qui est réalisé sur le côté inférieur (7) sous forme d'anneau de logement (10).

12. Dispositif de saisie et d'édition (1) selon l'une des revendications précédentes, dans lequel le dispositif de saisie et d'édition (1) comporte au moins une touche de commande (5, 6).

13. Dispositif de saisie et d'édition (1) selon l'une des revendications précédentes, dans lequel le dispositif de saisie et d'édition (1) comporte au moins un dispositif d'affichage (3).

14. Dispositif de saisie et d'édition (1) selon la revendication 1, dans lequel le dispositif d'affichage est choisi parmi le groupe des dispositifs d'affichage constitué des afficheurs à cristaux liquides, des afficheurs à diodes électroluminescentes organiques et des afficheurs à diodes électroluminescentes polymères.

15. Dispositif de saisie et d'édition (1) selon la revendication 13 ou 14, dans lequel le dispositif d'affichage (3) est relié à un premier dispositif de contact (19 ; 40 ; 45), pour recevoir pour le dispositif d'affichage (3) du courant électrique de l'appareil électrique (25) et pour afficher des données de l'appareil électronique (25).

16. Dispositif de saisie et d'édition (1), selon l'une des revendications précédentes, dans lequel le dispositif de saisie et d'édition (1) est réalisé sous forme de module qui peut être monté de manière amovible sur plusieurs appareils électroniques différents (25).

17. Dispositif de saisie et d'édition (1) selon l'une des revendications précédentes, dans lequel le dispositif de saisie comporte au moins un dispositif de saisie du groupe des dispositifs de saisie constitué des boutons poussoirs, des commutateurs, des écrans tactiles, des touches, des roulettes, des palettes et des manettes.

18. Dispositif de saisie et d'édition (1) selon l'une des revendications précédentes, dans lequel le dispositif de saisie et d'édition (1) est essentiellement cylindrique et s'ajuste dans un logement cylindrique de l'appareil électronique (25).

19. Combinaison comprenant :
- un dispositif de saisie et d'édition (1) selon l'une des revendications 1 à 18 pour saisir des données et/ou pour afficher des informations d'un appareil électronique (25), dans lequel le dispositif de saisie et d'édition (25) est réalisé pour être monté de manière amovible sur l'appareil électronique (25), dans au moins deux positions différentes, et comporte un premier dispositif de contact (19 ; 40 ; 45),
et
- au moins un appareil électronique (2) qui est réalisé pour loger et monter de manière amovible le dispositif de saisie et d'édition (1) dans au moins deux positions différentes et comporte un deuxième dispositif de contact (23 ; 41 ; 47)
dans lequel le premier dispositif de contact (19 ; 40 ; 45) et le deuxième dispositif de contact (23 ; 41 ; 47) sont réalisés de telle façon qu'il viennent en liaison électrique sur le au moins un appareil électronique (25), indépendamment de la position choisie lorsque le dispositif de saisie et d'édition (25) est monté.

20. Combinaison selon la revendication 19, dans laquelle l'appareil électronique (25) peut être choisi parmi le groupe des appareils constitué des détecteurs de pression, des détecteurs de niveau, des transmetteurs de seuil et des détecteurs de température.

21. Combinaison selon la revendication 19 ou 20, dans laquelle l'appareil électronique (25) comporte un dispositif de logement (26) pour loger le dispositif de saisie et d'édition et un dispositif de fixation (24) pour fixer le dispositif de saisie et d'édition sur l'appareil électronique (25).

22. Combinaison selon la revendication 21, dans laquelle le dispositif de logement comprend un premier dispositif d'enfichage et le dispositif de saisie et d'édition un deuxième dispositif d'enfichage.

23. Combinaison selon la revendication 21, dans laquelle le dispositif de fixation pour fixer le dispositif de saisie et d'édition (1) sur l'appareil électronique (25), est un élément de couvercle séparé (24).

24. Combinaison selon la revendication 24, dans lequel l'élément de couvercle (24) comporte un taraudage et l'appareil électronique (25) comporte un filetage qui peut être vissé sur le taraudage.

25. Appareil électronique (25) comprend un dispositif de logement (26) selon l'une des revendications 1 à 18, pour monter de manière amovible un dispositif de saisie et d'édition (1) et un dispositif de contact (23 ; 41 ; 47) qui est réalisé de telle façon que, lorsque le dispositif de saisie et d'édition (1) est monté sur l'appareil électrique (25), elle vient en liaison électrique, dans au moins deux positions différentes du dispositif de saisie et d'édition (1), avec un dispositif de contact (19 ; 40 ; 45) qui se situe sur le dispositif de saisie et d'édition (1).
